# EUROPEAN PATENT SPECIFICATION

(11) **EP 0 665 097 B1**
(45) Date of publication and mention of the grant of the patent: **09.06.1999**
(21) Application number: 95300180.7
(22) Date of filing: 12.01.1995
(51) Int. Cl.: B29C 70/44, B29C 53/22, B29D 22/00, B64C 1/00

(54) **Method and apparatus for molding structural panels with a corrugated core**
Verfahren und Vorrichtung zur Herstellung von strukturellen Platten mit einem Wellenprofilkern
Procédé et dispositif pour mouler des panneaux structurels avec une âme à profil ondulé

(30) Priority: 13.01.1994 GB 9400577
(43) Date of publication of application: 02.08.1995
(60) Divisional application: 97109737.3
(73) Proprietor: BRITISH AEROSPACE PUBLIC LIMITED COMPANY, Farnborough, Hants. GU14 6YU (GB)
(72) Inventor: Turner, Brian J., BAe Airbus Limited, Bristol BS99 7AR (GB); Hussey, Sara, BAe Airbus Limited, Bristol BS99 7AR (GB); Davies, Huw E., BAe Airbus Limited, Bristol BS99 7AR (GB)

(56) References cited:
- EP-A- 0 351 565
- CA-A- 1 284 088
- GB-A- 1 522 432
- GB-A- 2 256 611
- US-A- 3 641 230
- US-A- 3 764 431
- US-A- 4 946 526
- US-A- 5 332 178

## Description

This invention relates to the forming of structures and in particular, though not exclusively, to the forming of structures to support aerodynamic profile-defining panels for aircraft, and indeed for hydrodynamic surfaces where appropriate. The invention finds particular relevance with respect to aerodynamic profile-defining panels, usually at or near the leading edge of aircraft wings, tail planes, etc. which serve to create hybrid laminar flow control by drawing boundary layer air through the profile-defining skin into passages defined in a sub-structure supporting the skin through tiny perforations in the skin. US patent No. 5263667 to the Boeing Company discloses a structure (26, 28) to support a perforated aerodynamic profile-defining sheet of material (24) having a profile-defining surface and a reverse surface.

With hybrid laminar flow control the skin panel of an aerodynamic surface of the aircraft is formed with many thousands of closely spaced perforations which may have a pitch of the order of 0.5mm. Attachment of a supporting structure to the skin is thus complicated by the need to avoid attaching same to the skin in a way which takes up significant surface area of the skin and blocks too many perforations. Such blockages would upset the hybrid laminar flow control by causing unpredictability in the suction effect through the skin which would cause irregularities in the removal of the boundary layer from the airflow over the aerodynamic surface.

Furthermore the perforated skin outer surface has to conform to strict aerodynamic tolerance with respect to joint gaps, protrusions and waviness and a ducted structure to suck air through this perforated skin has to be constructed and sealably attached to this skin to provide support and be used to create suction pressure drop across the skin in defined areas.

It is therefore an object of this invention to provide means for attachment of such a structure to the skin panel to avoid these difficulties.

According to one aspect of the invention there is provided a method of forming a support structure for a perforated aerodynamic profile-defining metallic sheet having a profile-defining surface and a reverse surface including the steps of supporting the metallic sheet in a profile-defining configuration, forming a mould tool for the support structure at least in part from the reverse surface of the metallic sheet, forming a layup of fibre reinforcing material together with plastics matrix material in the mould tool and consolidating the support structure by the application of heat and pressure as necessary.

The support structure will thus be a perfect match to the profile-defining metallic sheet for attachment purposes and expensive, high tolerance tooling is not therefore required.

The forming operation may be used to simultaneously adhesively bond the metallic sheet to the support structure, alternatively the support structure may be formed separately from the metallic sheet, for example by using a release agent inserted between the metallic sheet and the layup, at the layup stage.

The step of forming the mould tool may include inserting discrete tool elements between folds in the layup whereby to form a corrugated support structure.

This method of forming the mould tool is particularly advantageous when the layup is to be adhesively bonded to the metallic sheet during the forming operation as it allows the discrete elements of the tool to be removed after forming to leave a continuous corrugated support structure adhesively bonded to the metallic aerodynamic profile-defining sheet.

To facilitate this aspect of the forming operation the discrete tool elements are preferably formed of elastomeric material. In addition, some of the discrete tool elements may be formed hollow to allow the passage of a pressurising medium therethrough to assist in consolidating the layup and to assist in reducing their size for withdrawal purposes after forming.

Additionally, some of the discrete tool elements may be tapered in form to ease withdrawal after forming of the support structure.

Preferably, mandrels comprising discrete tool elements of an elastomeric material like silicone rubber are positioned whereby hollow and solid mandrels alternate along the structure.

According to one variation of the method a sheet of structural material may be positioned in the mould tool on the opposite side of the corrugations from the profile-defining metallic sheet whereby to be adhesively bonded to the corrugations of the layup to form a series of closed passages from the corrugations.

In a preferred variation on the method the layup is configured to contact the sheet of material across narrow areas to minimise perforation blockage.

According to a second aspect of the invention there is provided a mould tool for forming a fibre reinforced composites structure to support an aerodynamic profile-defining metallic sheet having a profile-defining surface and a reverse surface, the tool including part of the reverse surface of the metallic sheet against which a layup of fibre reinforcing composite material is placeable for forming to shape.

Preferably the tool includes discrete tool elements positioned between folds in the layup whereby to form a corrugated support structure.

Preferably the discrete tool elements are made of elastomeric material, more preferably some of the elements are hollow and may be connected to pressurising means to inflate same in order to apply pressure to the layup during consolidation.

The discrete tool elements are conveniently generally triangular in cross section and may comprise a truncated triangle whereby adjacent elements in the tool may be positioned in alternating orientation to create the said corrugated support structure.

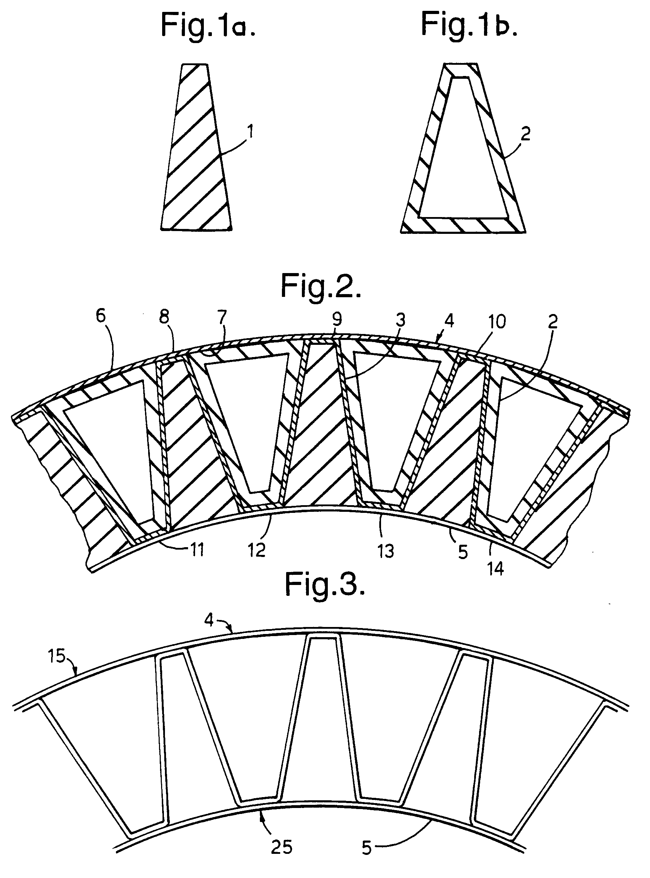

The invention will now be described by way of example with regard to the accompanying drawings of which;
Figure 1a shows a solid mandrel as used in tooling according to the invention;
Figure 1b shows a hollow mandrel;
Figure 2 shows a tool including a layup for use in accordance with the invention;
Figure 3 shows a structure according to the invention;
   Referring to figures 1a and 1b, alternative forms of discrete tool elements in the form of silicone rubber mandrels are shown, mandrel 1 being solid and mandrel 2 being hollow. The mandrels 1 and 2 are shown in position in use, in figure 2. Interposed between the mandrels is a layer of "pre-preg" fibre reinforced composite material 3. The pre-preg 3 contacts, on one side of the assembly, a perforated titanium aerodynamic profile-defining sheet 4, and on the other side a reinforced glass fibre layer 5. The titanium sheet 4 has an aerodynamic profile-defining surface 6 by which the titanium sheet 4 is supported during layup and consolidation and a reverse surface 7 against which the hollow mandrels 2 and pre-preg 3 are placed. It will be seen that the mandrels 1 are alternated with their partner mandrels 2 across the assembly and that adjacent mandrels 1, 2 are of opposite types and orientated in opposite senses. In this way a "saw-tooth" corrugated configuration is given to the pre-preg material interspersed therebetween.

The pre-preg material 3 contacts the reverse surface 7 of the titanium sheet at areas 8, 9 and 10. It will be noted that these areas are relatively narrow in order to obstruct as few perforations in the titanium sheet 4 as possible. In this embodiment no release agent has been applied to the titanium sheet 4 which will result in the layup of pre-preg material being adhesively bonded to the titanium sheet in the consolidation process. In addition the glass fibre layer 5 will become adhesively bonded to the pre-preg layup 3 at areas 11, 12, 13 and 14. A complete ducted structure 15 will therefore result, as shown in figure 3. If, for any reason, it is required to separate the fibre reinforced material 3 from the titanium sheet 4 after the consolidation process a layer of release agent can be applied to contact areas 8, 9, 10 on the titanium sheet 4, before layup takes place. This will prevent adhesion and enable any finishing steps required to be carried out either to the titanium sheet 4 or the composites structure 25 resulting from the consolidation process.

In accordance with the invention, once the titanium sheet 4 has been supported in position the hollow mandrels 2 are placed against the reverse surface 7 thereof, the pre-preg layup 3 is then laid in the position shown and the solid mandrels 2, followed by the glass fibre layer 5 put in place and clamped in position. The hollow mandrels 2 are then connected to a pressure source and pressurised to compress the pre-preg layup 3 against the titanium sheet 4, the solid mandrels 1 and the glass fibre layer 5. Heat is also applied at this stage when the whole assembly is bagged and placed in an autoclave to enable full integration of the pre-preg material for it to take its final form. Upon completion of the consolidation phase, after de-bagging, the pressure is released from the hollow mandrels 2 which are withdrawn first. The solid mandrels 1 are then withdrawn in turn. These are slightly tapered along their axis to ease withdrawal. The resulting structure 15, as shown in figure 3, is now complete and ready for fitting or any further operations which need to be carried out on it.

It will be appreciated that this method according to the invention allows a support structure to be formed precisely to the shape of an aerodynamic profile-defining sheet of material without the use of special high tolerance tooling and enabling a perfect fit to be achieved, whether this fit be utilised from an adhesion bond formed during the forming process or a later adhesion bonding process. The tooling used is both cheap to produce and low tolerance and is also resistant to damage.

The method described enables attachment of the support structure to the titanium sheet as efficiently as possible with adhesive areas being minimised.

## Claims

1. A method of forming a support structure (25) for a perforated aerodynamic profile-defining metallic sheet (4) having a profile-defining surface and a reverse surface, the method characterised by including the steps of supporting the metallic sheet in a profile-defining configuration, forming a mould tool for the support structure at least in part from the reverse surface (7) of the metallic sheet, forming a layup of fibre reinforcing material (3, 5) together with plastics matrix material in the mould tool and consolidating the support structure (25) by the application of heat and pressure as necessary.

2. A method according to claim 1 in which the forming operation is used to simultaneously adhesively bond the metallic sheet (4) to the support structure (25).

3. A method according to claim 1 in which the support structure (25) is formed separately from the metallic sheet (4).

4. A method according to claim 1, 2 or 3 including inserting discrete tool elements (1,2) between folds in the layup whereby to form a corrugated support structure.

5. A method according to claim 4 in which solid and hollow discrete tool elements (1,2) are positioned alternately in the mould tool.

6. A method according to claim 4 or 5 in which a sheet of structural material (5) is positioned in the mould tool on the opposite side of the corrugations from the profile-defining sheet (4) whereby to be adhesively bonded to the corrugations of the layup (3) to form a series of closed passages from the corrugations.

7. A method according to any preceding claim in which the layup (3) is configured to contact the metallic sheet (4) across narrow areas to minimise perforation blockage.

8. A mould tool for forming a fibre reinforced composites structure (25) to support an aerodynamic profile-defining metallic sheet (4) having a profile-defining surface (6) and a reverse surface (7), characterised in that the tool includes part of the reverse surface (7) of the metallic sheet (4) against which a layup (3) of fibre reinforcing composite material is placeable for forming to shape.

9. A mould tool according to claim 8 including discrete tool elements (1,2) positioned between folds in the layup (3) whereby to form a corrugated support structure (25).

10. A mould tool according to claim 8 or 9 in which the discrete tool elements (1,2) are made of elastomeric material.

11. A mould tool according to claim 10 in which at least some of the discrete tool elements (2) are hollow and connectable to pressurising means to be inflated to apply pressure to the layup (3) during consolidation.

12. A mould tool according to any of claims 9 to 11 in which the discrete tool elements (1,2) are generally of truncated triangular cross sectional shape.

## Patentansprüche

1. Verfahren zur Herstellung einer Tragstruktur (25) für ein perforiertes, ein aerodynamisches Profil definierendes Metallblech (4), das eine ein Profil definierende Oberfläche und eine rückwärtige Oberfläche aufweist, wobei das Verfahren
dadurch gekennzeichnet ist, daß die folgenden Schritte durchgeführt werden: das Metallblech wird in einer das Profil definierenden Form abgestützt; es wird ein Formwerkzeug für die Tragstruktur wenigstens teilweise von der Rückseite (7) des Metallblechs hergestellt; es wird eine Auflage aus faserverstärktem Material (3, 5) zusammen mit Plastikmatrixmaterial in das Formwerkzeug eingelegt, und es wird die Tragstruktur (25) erforderlichenfalls durch Anwendung von Hitze und Druck verfestigt.

2. Verfahren nach Anspruch 1, bei welchem das Herstellungsverfahren benutzt wird, um gleichzeitig eine Klebeverbindung zwischen dem Metallblech (4) und der Tragstruktur (25) herzustellen.

3. Verfahren nach Anspruch 1, bei welchem die Tragstruktur (25) getrennt von dem Metallblech (4) hergestellt wird.

4. Verfahren nach den Ansprüchen 1, 2 oder 3, bei welchem diskrete Werkzeugelemente (1, 2) zwischen Faltungen in der Auflage eingeführt werden, wodurch eine gewellte Tragstruktur geschaffen wird.

5. Verfahren nach Anspruch 4, bei welchem massive und hohle diskrete Werkzeugelemente (1, 2) abwechselnd in das Formwerkzeug eingelegt werden.

6. Verfahren nach den Ansprüchen 4 oder 5, bei welchem eine Platte aus konstruktivem Material (5) in das Formwerkzeug auf der Seite der Wellungen aufgelegt wird, die dem das Profil definierenden Blech (4) abgewandt ist, wobei dieses Material (5) an den Wellungen der Auflage (3) verklebt wird, um eine Reihe von Kanälen zu schaffen, die durch die Wellungen geschlossen sind.

7. Verfahren nach einem der vorhergehenden Ansprüche, bei welchem die Auflage (3) das Metallblech (4) nur über schmale Bereiche berührt, um eine Blockierung der Perforationslöcher auf ein Mindestmaß zu beschränken.

8. Formwerkzeug zur Herstellung einer faserverstärkten Verbundstruktur (25), die ein ein aerodynamisches Profil definierendes Metallblech (4) abstützt, das eine ein Profil definierende Oberfläche (6) und eine Rückseite (7) aufweist,
dadurch gekennzeichnet, daß das Werkzeug einen Teil der rückwärtigen Oberfläche (7) des Metallblechs (4) umfaßt, gegen die eine Auflage (3) aus faserverstärktem Verbundmaterial gelegt werden kann, um die erforderliche Formgestalt zu schaffen.

9. Formwerkzeug nach Anspruch 8, welches diskrete Werkzeugelemente (1, 2) aufweist, die zwischen den Wellungen der Auflage (3) zu liegen kommen, wodurch eine gewellte Tragstruktur (25) zustande kommt.

10. Formwerkzeug nach den Ansprüchen 8 oder 9, bei welchem die diskreten Werkzeugelemente (1, 2) aus elastomerem Material bestehen.

11. Formwerkzeug nach Anspruch 10, bei welchem wenigstens einige der diskreten Werkzeugelemente (2) hohl sind und an einen Druckerzeuger angeschlossen werden können, um aufgeblasen zu werden und um einen Druck auf die Auflage (3) auszuüben, während die Verfestigung stattfindet.

12. Formwerkzeug nach einem der Ansprüche 9 bis 11, bei welchem die diskreten Werkzeugelemente (1, 2) allgemein die Form von dreieckigen Pyramidenstümpfen haben.

## Revendications

1. Procédé de formage d'une structure de support (25) pour une feuille métallique perforée à profilage aérodynamique (4) comportant une surface à profilage et une surface inverse, le procédé étant caractérisé en ce qu'il comprend les étapes consistant à supporter la feuille métallique selon une configuration à profilage, à former un outil de moule pour la structure de support au moins en partie à partir de la surface inverse (7) de la feuille métallique, à former une superposition de matériau de renforcement des fibres (3, 5) avec un matériau de matrice plastique dans l'outil de moule et à consolider la structure de support (25) par l'application de chaleur et d'une pression en fonction des nécessités.

2. Procédé suivant la revendication 1, dans lequel l'opération de formage est utilisée pour lier simultanément de manière adhésive la feuille métallique (4) à la structure de support (25).

3. Procédé suivant la revendication 1, dans lequel la structure de support (25) est formée séparément de la feuille métallique (4).

4. Procédé suivant la revendication 1, 2 ou 3, comprenant l'insertion d'éléments d'outil discrets (1, 2) entre les plis dans la superposition, formant de ce fait une structure de support ondulée.

5. Procédé suivant la revendication 4, dans lequel des éléments d'outil discrets pleins et creux (1, 2) sont positionnés en alternance dans l'outil de moule.

6. Procédé suivant la revendication 4 ou 5, dans lequel une feuille de matériau structurel (5) est positionnée dans l'outil de moule sur le côté opposé des ondulations de la feuille à profilage (4), grâce à quoi elle peut être liée de manière adhésive aux ondulations de la superposition (3) pour former une série de passages fermés à partir des ondulations.

7. Procédé suivant l'une quelconque des revendications précédentes, dans lequel la superposition (3) est configurée pour entrer en contact avec la feuille métallique (4) à travers des zones étroites pour réduire l'obturation des perforations au minimum.

8. Outil de moule pour former une structure composite renforcée par des fibres (25) pour supporter une feuille métallique à profilage aérodynamique (4) comportant une surface à profilage (6) et une surface inverse (7), caractérisé en ce que l'outil comprend une partie de la surface inverse (7) de la feuille métallique (4) contre laquelle une superposition (3) de matériau composite de renforcement des fibres peut être placée en vue de la mise en forme.

9. Outil de moule suivant la revendication 8, comprenant des éléments d'outil discrets (1, 2) positionnés entre les plis dans la superposition (3) permettant de former une structure de support ondulée (25).

10. Outil de moule suivant la revendication 8 ou 9, dans lequel les éléments d'outil discrets (1, 2) sont faits d'un matériau élastomère.

11. Outil de moule suivant la revendication 10, dans lequel au moins certains des éléments d'outil discrets (2) sont creux et peuvent être reliés à des moyens de pressurisation pour être gonflés pour appliquer une pression à la superposition (3) au cours de la consolidation.

12. Outil de moule suivant l'une quelconque des revendications 9 à 11, dans lequel les éléments d'outil discrets (1, 2) sont généralement, en coupe transversale, de forme triangulaire tronquée.
